# EUROPÄISCHE PATENTSCHRIFT

(11) **EP 1 924 828 B1**
(45) Veröffentlichungstag und Bekanntmachung des Hinweises auf die Patenterteilung: **08.08.2012**
(21) Anmeldenummer: 06775930.8
(22) Anmeldetag: 08.09.2006
(51) Int. Cl.: G01G 21/07, G01G 21/16, G01G 21/24

(54) **HEBELGETRIEBE, INSBESONDERE FÜR EINEN WÄGEAUFNEHMER EINER NACH DEM PRINZIP DER ELEKTROMAGNETISCHEN KRAFTKOMPENSATION ARBEITENDEN WAAGE**
CRANK MECHANISM IN PARTICULAR FOR A WEIGHING SENSOR ON A BALANCE WORKING ON THE ELECTROMAGNETIC FORCE COMPENSATION PRINCIPLE
ORGANE DE COMMANDE A LEVIER UTILISE EN PARTICULIER POUR UN CAPTEUR DE PESEE D'UNE BALANCE FONCTIONNANT SELON LE PRINCIPE DE LA COMPENSATION DE FORCE ELECTROMAGNETIQUE

(30) Priorität: 13.09.2005 DE 102005043820
(43) Veröffentlichungstag der Anmeldung: 28.05.2008
(73) Patentinhaber: Wipotec Wiege- und Positioniersysteme GmbH, 67657 Kaiserslautern (DE)
(72) Erfinder: HAUCK, Timo, 67663 Kaiserslautern (DE)
(74) Vertreter: Eder, Thomas
(86) Internationale Anmeldenummer: PCT/DE2006/001569
(87) Internationale Veröffentlichungsnummer: WO 2007/031054

(56) Entgegenhaltungen:
- EP-B1- 0 518 202
- DE-C1- 19 923 207
- DE-U1- 29 613 668
- US-A1- 2002 038 729

## Beschreibung

Die Erfindung betrifft ein Hebelgetriebe, insbesondere für einen Wägeaufnehmer einer nach dem Prinzip der elektromagnetischen Kraftkompensation arbeitenden Waage, mit den Merkmalen des Oberbegriffs des Patentanspruchs 1.

Hebelgetriebe und nach dem Prinzip der elektromagnetischen Kraftkompensation arbeitende Waagen und hierfür geeignete Wägeaufnehmer sind in den vielfältigsten Ausführungsformen bekannt. Um ein hochgenaues Wägesignal zu erhalten, finden meist monolithische Wägeaufnehmer Verwendung, die gegenüber nicht-monolithischen Wägeaufnehmern u.a. den Vorteil einer hervorragenden Langzeitstabilität aufweisen. Ein mehrstückiger Zusammenbau, beispielsweise aus Stahlfedern, wird heute von führenden Wägetechnik Herstellern nicht mehr ausgeführt und kann als "veraltete Technik" angesehen werden.

Monolithische Wägeaufnehmer lassen sich auf unterschiedliche Weisen herstellen, insbesondere durch Fräsen oder erodierende Bearbeitung. Die DE 199 23 207 C1 zeigt beispielsweise eine komplexe dreidimensionale Struktur, wobei die gewünschte hohe Übersetzung mit drei in Reihe angeordneten Winkelhebeln realisiert ist. Um die Baugröße zu reduzieren wurden bei dieser Struktur bestimmte Hebel bzw. Hebelarme oder Koppelelemente symmetrisch in Bezug auf einen zwischen diese Hebel bzw. Hebelarme oder Koppelelemente vorkragenden Teil des ortsfesten Grundkörpers aufgeteilt. Der vorkragende Teil des Grundkörpers bildet dabei auch Widerlager für bestimmte bestimmte Hebel bzw. Hebelarme oder Koppelelemente. Trotz der Komplexität dieser Struktur ist diese so gewählt, dass sie insgesamt monolithisch gefertigt werden kann. Dagegen erlaubt eine erodierende Herstellung eines monolithischen Wägeaufnehmers in der Regel nur eine zweidimensionale Struktur. Ein derartig hergestellter Wägeaufnehmer ist beispielsweise in der EP 0 518 202 B1 dargestellt. Diese beschreibt eine Ausführungsform eines dreifach übersetzten Wägeaufnehmers, wobei der letzte Hebelarm des letzten der drei in Reihe geschalteten Hebel seitlich an den monolithisch hergestellten Grundkörper angeschraubt werden muss.

Die US 2002/0038729 A1 beschreibt einen zusammengesetzten Wägeaufnehmer mit zwei Übersetzungsstufen, wobei eine die beiden Hebel realisierende, monolithisch hergestellte Struktur in eine ebenfalls monolithisch hergestellte Parallellenker-Struktur eingesetzt und mit dieser verbunden wird.

Ein weiterer Wägeaufnehmer ist aus DE 296 13 668 U1 bekannt.

Problematisch bei all diesen, bekannten monolithisch hergestellten Ubersetzungsstrukturen von Wägeaufnehmern ist jedoch, dass zur Realisierung von hohen Übersetzungsverhältnissen mehrere in Reihe geschaltete Hebel erforderlich sind, da die Gelenke, welche die jeweilige Schwenkachse für den betreffenden Hebel bilden, aus fertigungstechnischen Gründen nicht beliebig nahe an die Positionen heran gerückt werden können, an denen die Kraft auf den kürzeren Hebelarm eingeleitet werden muss, also in der Regel die Position, an der die Lastkraft auf den Hebel eingeleitet werden muss. Der kürzeren Hebelarm kann also bei bekannten Strukturen nicht unter einen bestimmten Minimalwert reduziert werden, der sich aus der Geometrie der Struktur und fertigungstechnischen Parametern ergibt, beispielsweise aus dem erforderlichen Fräserdurchmesser zur Erzeugung einer Gelenk-Dünnstelle im monolithischen Materialblock oder einem verfügbaren minimalen Fräserdurchmesser. Um ein gewünschtes großes Übersetzungsverhältnis zu realisieren muss daher zwingend der größere Hebelarm verlängert werden. Ist dies durch eine vorgegebene maximale geometrische Ausdehnung des Wägeaufnehmers in dieser Raumachse nicht möglich, so bleibt nur das In-Reihe-Schalten von mehreren Hebeln, um das gewünschte Übersetzungsverhältnis zu erreichen.

Allerdings ist bei der Realisierung eines großen Übersetzungsverhältnisses auch zu berücksichtigen, dass entsprechend große Kräfte über das Gelenk auf den ortsfesten Grundkörper zu übertragen sind. Das jeweilige elastisch deformierbare Gelenk muss daher entsprechend stabil, insbesondere zug- und/oder druckfest, ausgebildet sein. Dies führt jedoch andererseits zu einem hohen Widerstand gegenüber einer Bewegung des Hebels um die gewünschte Rotationsachse, d.h. das elastisch deformierbare Gelenk weist eine große Federkonstante gegenüber Rotationsbewegungen um die gewünschte Rotationsachse auf, so dass auch aus diesem Grund nicht beliebig große Übersetzungsverhältnisse mit einem einzigen Hebel realisierbar sind.

Des Weiteren weisen die bekannten Strukturen den Nachteil einer geringen Steifigkeit des die Schwenkachse eines Hebels bildenden, elastisch deformierbaren Gelenks in der translatorischen Richtung senkrecht zur Längserstreckungsebene des Gelenks und in der rotatorischen Richtung um Achsen parallel zur Längserstreckungsrichtung des Gelenks auf. Dies führt bei einem Auftreten unerwünschter statischer oder dynamischer Kräfte (die durch unerwünschte Beschleunigungen, beispielsweise Vibrationen erzeugt werden) zu einer Beeinträchtigung der Messgenauigkeit.

In der Praxis weist ein derartiges elastisch deformierbares Gelenk eine Breite (die nicht notwendigerweise konstant sein muss, jedoch wird dies aus Gründer einer einfacheren Herstellung häufig der Fall sein) auf, die um ein Mehrfaches größer ist als die dünnste Stelle (in der Raumachse senkrecht zur die Breite des Gelenks definierenden Raumachse, wobei die Stärke der dünnsten Stelle in der Regel über die gesamte Breite des Gelenks konstant sein wird), wobei die Deformation zur Erzeugung der Schwenkbewegung des Hebels durch ein Biegen des Gelenks um eine Achse erfolgt, die parallel zum Verlauf der dünnsten Stelle des Gelenks verläuft. Der Biegebereich definiert also eine Längserstreckungsebene, wobei die Biegebewegung senkrecht zu dieser Längserstrekkungsebenen erfolgt

Ein solches Hebelgetriebe ist selbstverständlich nicht nur für einen Wägeaufnehmer einsetzbar, sondern für alle Anwendungsfälle und Vorrichtungen bei der die Übersetzung, Untersetzung oder einfach die Übertragung einer Kraft oder einer Bewegung zwischen einem Eingang des Getriebes und einem Ausgang des Getriebes erforderlich ist.

Der Erfindung liegt daher die Aufgabe zu Grunde, ein Hebelgetriebe zu schaffen, das eine reduzierte Empfindlichkeit gegenüber unerwünschten statischen und dynamischen Kräften bzw. Beschleunigungen in Raumrichtungen und Rotationsrichtungen aufweist, die nicht der Rotationsrichtung der erwünschten Schwenkbewegungen des oder der Hebel des Hebelgetriebes entsprechen, und das bei geringer Baugröße eine hohe Übersetzung bzw. Untersetzung der Kraft bzw. des Bewegungswegs ermöglicht.

Die Erfindung löst diese Aufgabe mit den Merkmalen des Patentanspruchs 1.

Die Erfindung geht von der Erkenntnis aus, dass ein elastisch deformierbares Gelenk, welches zwei elastisch deformierbare Biegebereiche umfasst, deren Längserstrekkungsebenen einen Winkel ungleich Null einschließen, vorzugsweise einen Bereich von 45 bis 135 Grad, in den vorstehend erläuterten Translations- und Rotationsachsen eine gravierend verbesserte Steifigkeit gegenüber Gelenken aufweist, die in bekannter Weise aus nur einem einzigen Biegebereich bestehen.

Während bei bekannten, monolithisch aufgebauten Wägeaufnehmern bzw. deren Hebelgetrieben die Längserstreckungsebene des einzigen Biegebereichs des elastisch deformierbaren Gelenks immer parallel zur Richtung der jeweils auf den Hebel wirkenden Lastkraft gewählt wird, um eine möglichst definierte Rotationsachse für die Schwenkbewegung des Hebels zu erhalten, kann die Anordnung der beiden Biegebereiche der erfindungsgemäßen Gelenkstruktur relativ frei gewählt werden. Es ergibt sich in jedem Fall eine definierte Lage der Rotationsachse für die Schwenkbewegung des betreffenden Hebels.

An dieser Stelle sei darauf hingewiesen, dass der wenigstens eine Hebel des Hebelgetriebes nicht unmittelbar am Grundkörper oder Festland angebunden sein muss. Es kann auch eine Struktur vorgesehen sein, bei der eine Hebel mittels des elastisch deformierbaren Gelenks an einem mit dem Grundkörper verbundenen Element, beispielsweise einem weiteren, vorgeschalteten Hebel verbunden ist.

Nach einer Ausführungsform können die zwei elastischen deformierbaren Biegebereiche eine Breite aufweisen, die groß gegen die Dicke des betreffenden Biegebereichs an seiner jeweils dünnsten Stelle in der Richtung senkrecht zur jeweiligen Längserstrekkungsebene ist. Hierdurch ergibt sich eine bessere Biegesteifigkeit jedes einzelnen Biegebereichs gegenüber einer Biegebeanspruchung um eine Achse senkrecht zur betreffenden Längserstreckungsebene. Durch die Anordnung der Längserstreckungsebenen der beiden Biegebereiche mit einem Winkel ungleich Null Grad ergibt sich zudem eine gegenüber einem einzigen Biegebereich verbesserte Biegesteifigkeit um alle Achsen, ausgenommen der gewünschten Rotationsachse für die Schwenkbewegung des Hebels. Diese ist wegen der anteiligen Aufnahme der Rotationskräfte durch die beiden Biegebereiche in Form von Zug- und Druckbeanspruchungen sogar deutlich höher als bei einer gedachten Addition der Biegesteifigkeiten der beiden Biegebereiche um deren Längserstreckungsrichtung. Damit wird das Hebelgetriebe oder die Vorrichtung, die ein derartiges Hebelgetriebe aufweist, drastisch unempfindlicher gegenüber Störkräften oder Störbeschleunigungen, die z.B. durch entsprechende Bewegungen des Hebelgetriebes oder der gesamten Vorrichtung erzeugt werden, beispielsweise durch Erschütterungen, Vibrationen etc.

Bei der bevorzugten Ausführungsform der Erfindung wird man die Biegebereiche symmetrisch zur betreffenden Längserstreckungsebene ausbilden. Auf diese Weise ergibt sich zum einen ein einfacheres Design, da sich derartige Strukturen praktisch nur noch mit numerischen Methoden entwickeln lassen, und zum anderen wird die Fertigung einer derartigen Struktur einfacher, insbesondere bei einer zerspanenden bzw. fräsenden Fertigung.

Bei der Berechnung einer ganzen Reihe unterschiedlicher Strukturen hat sich herausgestellt, dass insbesondere bei erfindungsgemäßen Gelenkstrukturen, welche symmetrisch zur Längserstreckungsebenen ausgebildet sind, die virtuelle Schwenkachse des wenigstens einen Hebels mit der Schnittgeraden der beiden Längserstreckungsebenen identisch ist bzw. zu dieser parallel ist und einen sehr geringen Abstand zu dieser Schnitteraden aufweist. Mit dieser Erkenntnis wird der Entwurf derartiger Strukturen erleichtert bzw. vereinfacht.

Werden die beiden Biegebereiche, welche das elastisch deformierbare Gelenk bilden, so ausgeführt, dass die Biegerichtung (oder die Schwenkachse) des jeweils einzelnen Biegebereichs durch das Vorsehen einer geradlinig verlaufenden, dünnste Stelle festgelegt ist, so müssen diese Schwenkachsen selbstverständlich parallel verlaufen.

Nach einer Ausführungsform können die Biegebereiche so vorgesehen sein, dass die Ebene, die den Winkel halbiert, der durch die Längserstreckungsebenen eingeschlossen wird, und die ebenfalls durch die virtuelle Schwenkachse bzw. die Schnittgerade der beiden Längserstreckungsebenen verläuft, senkrecht zur Richtung der Lastkraft verläuft. Diese Geometrie bietet den Vorteil, dass die Position der virtuellen Schwenkachse relativ zur Position der Angriffspunkte der Lastkraft bzw. der Reaktionskraft durch die geeignete Wahl und Festlegung des Winkels, der von den Längserstreckungsebenen eingeschlossen wird, bestimmt werden kann. Insbesondere ist es möglich den kurzen Hebelarm sehr klein werden zu lassen und damit ein großes Übersetzungsverhältnis zu erzeugen.

Nach einer anderen Ausführungsform können die Biegebereiche auch so vorgesehen sein, dass die den durch die Längserstreckungsebenen eingeschlossenen Winkel halbierende Ebene, die ebenfalls durch die virtuelle Schwenkachse verläuft, parallel zur Richtung der Lastkraft verläuft.

Bei einem insgesamt oder zumindest in entsprechendem Umfang ausgebildeten monolithischen Wägeaufnehmer, kann die Lastkraft über einen weiteren dünnen, elastisch deformierbaren Biegebereich auf den Hebel übertragen werden, wobei der Biegebereich so ausgestaltet ist, dass seine Längserstreckungsebene, in welcher die Richtung der Kraftübertragung verläuft, parallel zur virtuellen Schwenkachse verläuft. Wird die Biegerichtung des Biegebereichs bzw. die betreffende Schwenkachse durch eine geradlinig verlaufende dünnste Stelle definiert, so muss diese Schwenkachse parallel zur virtuellen Schwenkachse des betreffenden Hebels verlaufen.

Der Biegebereich zur Übertragung der Lastkraft kann dabei so vorgesehen sein, dass erforderlichenfalls (d.h. bei Auftreten entsprechender Kräfte) ein elastisches Biegen des Biegebereichs im Bereich der Schnittgeraden der Längserstreckungsebene mit der Ebene erfolgt, welche durch den gedachten Hebelarm und die virtuelle Schwenkachse aufgespannt wird. Der gedachte Hebelarm ergibt sich dabei als Abstand der virtuellen Schwenkachse von der Längserstreckungsebene des Biegebereichs.

Diese Geometrie hat den Vorteil, dass bei Auftreten von Kräften, die zur einer Biegung des Biegebereichs führen, über den die Lastkraft eingeleitet wird, und damit zu einer Änderung der Richtung, in der die Lastkraft auf den Hebel eingeleitet wird, der (gedachte) Hebelarm im Wesentlichen konstant bleibt.

Selbstverständlich kann auch die Reaktionskraft über einen weiteren dünnen, elastisch deformierbaren Biegebereich auf den Hebel übertragen werden, wobei der Biegebereich so ausgestaltet ist, dass seine Längserstreckungsebene, in welcher die Richtung der Kraftübertragung verläuft, parallel zur virtuellen Schwenkachse verläuft. Wird die Biegerichtung bzw. die Schwenkachse des Biegebereichs wiederum durch eine geradlinig verlaufende dünnste Stelle definiert, so muss diese Schwenkachse ebenfalls parallel zur virtuellen Schwenkachse des betreffenden Hebels verlaufen.

Auch dieser Biegebereich zur Übertragung der Reaktionskraft kann dabei so vorgesehen sein, dass erforderlichenfalls (d.h. bei Auftreten entsprechender Kräfte) ein elastisches Biegen des Biegebereichs im Bereich der Schnittgeraden der Längserstreckungsebene mit der Ebene erfolgt, welche durch den gedachten Hebelarm und die virtuelle Schwenkachse aufgespannt wird. Der gedachte Hebelarm ergibt sich dabei wieder als Abstand der virtuellen Schwenkachse von der Längserstreckungsebene des Biegebereichs. Es ergibt sich hierdurch wiederum der vorstehend, im Zusammenhang mit einer entsprechenden Einleitung der Lastkraft erläuterte Vorteil eines vom Winkel der Einleitung der Reaktionskraft unabhängigen Hebelarms.

Nach einer Ausführungsform der Erfindung können einer oder beide Biegebereiche des elastisch deformierbaren Gelenks über ein Koppelelement mit dem Grundkörper verbunden sind.

Dabei wird man vorzugsweise zwischen dem Koppelelement und dem Grundkörper einen weiteren Biegebereich vorsehen, dessen Längserstreckungsebene mit der Längserstreckungsebene des Biegebereichs des elastisch deformierbaren Gelenks identisch ist, mit dem das Koppelelement mit dem Hebel verbunden ist.

Weitere Ausführungsformen ergeben sich aus den Unteransprüchen.

Die Erfindung wird nachstehend anhand in der Zeichnung dargestellter Ausführungsbeispiele näher erläutert. In der Zeichnung zeigen:
- Fig. 1: eine perspektivische Ansicht eines monolithischen Wägeaufnehmers einer ersten Ausführungsform der Erfindung mit einem zweistufigen Hebelgetriebe;
- Fig. 2: eine weitere perspektivische Ansicht des monolithischen Wägeaufnehmers in Fig. 1;
- Fig. 3: eine schematische Darstellung einer Struktur eines mittels eines Stemgelenks an den Grundkörper gekoppelten einseitigen Hebels eines Hebelgetriebes eines Wägeaufnehmers;
- Fig. 4: eine schematische Darstellung einer Struktur eines mittels eines Sterngelenks an den Grundkörper gekoppelten zweiseitigen Hebels eines Hebelgetriebes eines Wägeaufnehmers;
- Fig. 5: eine schematische Darstellung einer Struktur eines mittels eines Sterngelenks an den Grundkörper gekoppelten zweiseitigen Hebels eines Hebelgetriebes eines Wägeaufnehmers mit vereinfachter Anbindung an den Grundkörper;
- Fig. 6: eine schematische Darstellung einer Struktur eines mittels eines Sterngelenks an den Grundkörper gekoppelten zweiseitigen Hebels eines Hebelgetriebes eines Wägeaufnehmers mit einer gegen Verkippungen unempfindlichen der Lasteinleitung ;
- Fig. 7: eine schematische Darstellung einer weiteren Struktur eines mittels eines Sterngelenks an den Grundkörper gekoppelten zweiseitigen Hebels eines Hebelgetriebes eines Wägeaufnehmers mit einer gegen Verkippungen unempfindlichen der Lasteinleitung;
- Fig. 8: eine perspektivische Darstellung einer weiteren Struktur eines Sterngelenks mit im Raum versetzt angeordneten Biegebereichen;
- Fig. 9: eine perspektivische Ansicht eines monolithischen Wägeaüfnehmers einer zweiten Ausführungsform der Erfindung mit einem einstufigen Hebelgetriebe;
- Fig. 10: eine weitere perspektivische Ansicht des monolithischen Wägeaufnehmers in Fig. 8;

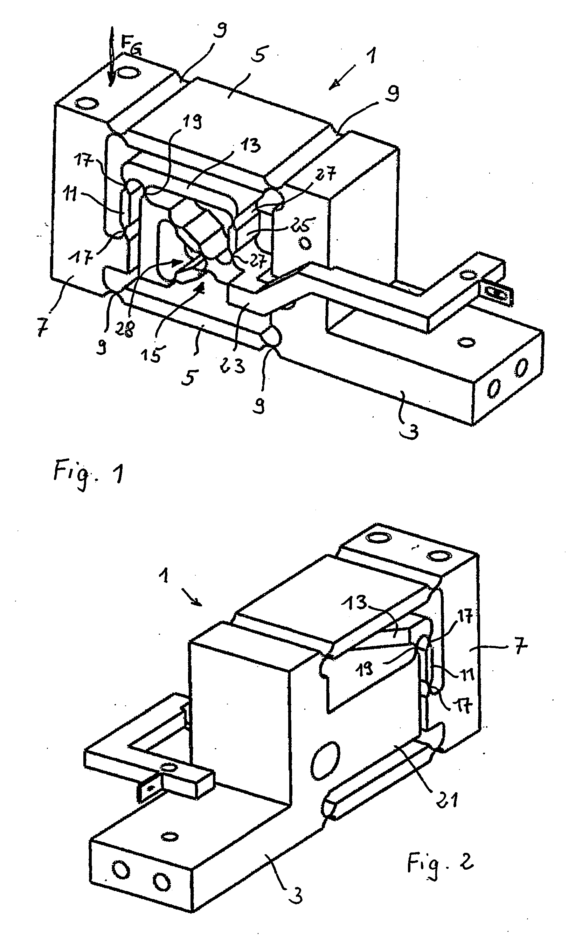

Der in Fig. 1 dargestellte Wägeaufnehmer 1 ist monolithisch ausgeführt. Er kann in dieser Form beispielsweise durch zerspanende Bearbeitung eines Materialblocks, insbesondere Fräsen und Bohren, hergestellt werden. Der Wägeaufnehmer 1 umfasst einen Grundkörper 3, der beispielsweise fest in das Gehäuse einer Waage montiert werden kann. Der Grundkörper 3 ist über zwei parallel verlaufende Arme oder Parallellenker 5 mit einem Lastaufnahmeelement 7 verbunden, wobei die Arme 5 jeweils über ein elastisch deformierbares Gelenk 9 mit dem ortsfesten Grundkörper 3 und dem Lastaufnahmeelement 7 verbunden sind. Das Lastaufnahmeelement 7 kann mit einer Aufnahmevorrichtung für ein zu wiegendes Gut (nicht dargestellt) verbunden werden.

Eine auf das Lastaufnahmeelement 7 wirkende Gewichtskraft F_{G} führt zu einer Auslenkung der Parallellenker 5 und einer Bewegung des Lastaufnahmeelements 7 in Richtung der Gewichtskraft 7.

Das Lastaufnahmeelement 7 ist über ein Koppelelement 11 mit dem kürzeren Hebelarm eines ersten Hebels 13 eines zweistufigen Hebelgetriebes 15 gekoppelt. Die Kopplung erfolgt wiederum durch jeweils ein elastisch deformierbares Gelenk 17 an beiden Enden des Koppelelements 11. Wie aus Fig. 2 ersichtlich erstreckt sich das Koppelelement 11 bei der dargestellten Ausführungsform über die gesamte Breite des Wägeaufnehmers 1. Der Hebel 13 ist über ein elastisch deformierbares Gelenk 19, welches sich ebenfalls über die gesamte Breite des Wägeaufnehmers 1 erstreckt, mit einem zwischen die Parallellenker 5 vorkragenden Bereich 21 (Fig. 2) des Grundkörpers 3 verbunden. Der längere Hebelarm des Hebels 13 verjüngt sich ausgehend von der gesamten Breite in der Nähe des Gelenks 19 bis zu seinem Endbereich derart, dass er über ein innerhalb der Breite des Wägeaufnehmers 1 seitlich neben dem vorkragenden Bereich 21 des Grundkörpers 3 angeordnetes Koppelelement 25 mit dem kürzeren Hebelarm eines zweiten Hebel 23 gekoppelt werden kann. Dieser zweite Hebel 23 ist als einarmiger Hebel ausgebildet. Die Kopplung erfolgt wiederum durch jeweils ein an den Enden des Koppelelements 25 vorgesehenes elastisch deformierbares Gelenk 27. Der Hebel 23 bzw. dessen längerer Hebelarm ist seitlich am Grundkörper 3 vorbei bis in dessen Endbereich geführt. Hier kann bei einer Verwendung des Wägeaufnehmers in einer nach dem Prinzip der elektromagnetischen Kraftkompensation arbeitenden Waage die Einrichtung zur Erzeugung des Wägesignals vorgesehen werden (nicht dargestellt).

Der Hebel 23 ist über ein Gelenk 28, das als Sterngelenk bezeichnet werden kann, mit dem vorkragenden Bereich 21 des Grundkörpers gekoppelt. Das Sterngelenk, dessen Struktur, Funktionsweise und weitere Eigenschaften im Folgenden erläutert werden, weist gegenüber einem einfachen elastisch deformierbaren Gelenk eine drastisch verbesserte Steifigkeit in allen Raumrichtungen und Rotationsrichtungen auf, ausgenommen die gewünschte Rotationsrichtung zur Ermöglichung der Schwenkbewegung des Hebels 23. Hierdurch wird die einseitige Ausbildung des zweiten Hebels 23 ermöglicht und gleichzeitig eine hohe Messgenauigkeit und Langzeitstabilität des Wägeaufnehmers 1 sowie eine hohe Unempfindlichkeit gegen von außen auf den Wägeaufnehmer 1 wirkende, unerwünschte statische und dynamische Störkräfte gewährleistet.

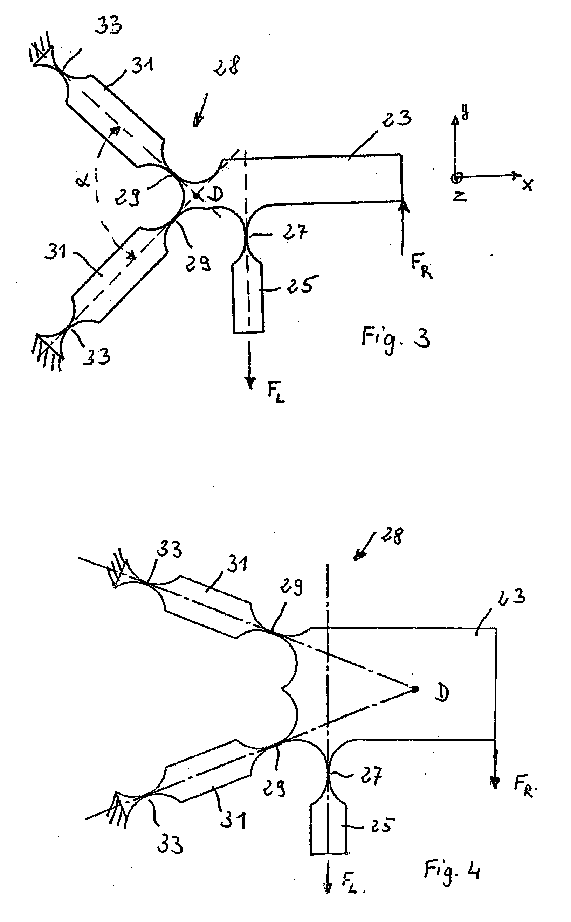

Das Prinzip des Sterngelenks 28 ist in Fig. 3 dargestellt. Die über das Koppelelement 25 auf den kurzen Hebelarm des Hebels 23 wirkende Lastkraft F_{L}, die sich insbesondere aus der Gewichtskraft F_{G}, dem Hebelverhältnis des ersten Hebels 13 und den Eigenschaften der elastisch deformierbaren Gelenke 9 und 19 ergibt, würde ohne dass am längeren Hebelarm eine das Gleichgewicht des Hebels bewirkende Reaktionskraft F_{R} erzeugt wird, beispielsweise durch eine Einrichtung zur elektromagnetischen Kraftkompensation, eine Schwenkbewegung des Hebels 23 um eine virtuelle Schwenkachse D bewirken.

Die virtuelle Schwenkachse D lässt sich bei derart komplizierten Strukturen praktisch nur noch mit numerischen Methoden ermitteln. Bei entsprechenden Untersuchungen hat sich herausgestellt, dass die virtuelle Schwenkachse D mit der Schnittgeraden der Längserstreckungsebenen der Biegebereiche 29 des Sterngelenks 28 identisch ist (oder einen allenfalls geringen Abstand von der Schnittgeraden aufweist), mit denen der Hebel 23 über die Koppelelemente 31 mit dem Festland, d.h. dem Grundkörper 3, gekoppelt sind. Die Kopplung der Koppelelemente 31 mit dem Festland erfolgt dabei wiederum über Biegebereiche 33, deren Längserstreckungsebenen mit den Längserstrekkungsebenen der Biegebereiche 29 identisch sind.

Da die Längserstreckungsebenen einen Winkel α einschließen weist das Sterngelenk 28 eine gegenüber einem einfachen, elastisch deformierbaren Gelenk, welches nur einen einzigen Biegebereich aufweist, eine deutlich verbesserte Steifigkeit in allen translatorischen Raumrichtungen x, y, z auf. Zudem ergibt sich eine drastisch verbesserte Steifigkeit gegen Rotationsbewegungen um die x-Achse und die γ-Achse, da entsprechende Rotationskräfte zu einem wesentlichen Teil als Zug- und Druckkräfte in den Biegebereichen 29 und 33 aufgenommen werden und nicht allein als Scherkräfte, wie bei einer Anbindung des Hebels 23 über einen einzigen Biegebereich, dessen Längserstrekkungsebene parallel zur Richtung der Einleitung der Lastkraft F_{L} verläuft (dieser Verlauf der Längserstreckungsebene ist bei der Verwendung eines einzigen Biegebereichs obligatorisch, da sich sonst keine ausreichend definierte Schwenkachse ergibt).

Bei der in Fig. 3 dargestellten Struktur eines Sterngelenks 28 können die Dünnstellen oder Biegebereiche 27 und 29 in einfacher Weise durch eine zerspanende Bearbeitung, beispielsweise durch Bohren hergestellt werden. Es sind hierfür insgesamt nur fünf Bohrungen erforderlich, da die einander zugewandten Flächen der Dünnstellen 29 mit einer einzigen Bohrung hergestellt werden können. Alternativ ist selbstverständlich (wie auch im Fall aller anderen Ausführungsbeispiele) eine Erzeugung der Struktur mit Hilfe dünner Schnitte (erodierende Bearbeitung) möglich.

Es ist auch möglich, die einander zugewandten Flächen der Dünnstellen 29 und 27 mit einer einzigen Bohrung herzustellen, jedoch kann hierbei die Position der Einleitung der Lastkraft F_{L} nicht mehr frei gewählt werden, sondern ist vom Durchmesser des Bohrers abhängig. Das Hebelverhältnis kann dann durch die Wahl der Lage der virtuellen Schwenkachse D und die Länge des längeren Hebelarms auf den gewünschten Wert eingestellt werden.

Die Lage der virtuellen Schwenkachse kann bei der Struktur des Sterngelenks nach Fig. 3 durch die entsprechende Wahl des Winkels α zwischen den Längserstreckungsebenen der Biegebereiche 29 eingestellt werden. Dabei ist aus Fig. 3 klar ersichtlich, dass für kleinere Winkel α als in der Zeichnung dargestellt, der kleinere Hebelarm immer kleiner und dementsprechende das Übersetzungsverhältnis immer größer wird.

Unterschreitet der Winkel α einen bestimmten Wert, so kommt die virtuelle Schwenkachse sogar in der Zeichnung rechts von der Längserstreckungsebene des Biegebereichs 27 zu liegen. In diesem Fall entsteht ein zweiseitiger Hebel, der gegenüber dem in Fig. 3 dargestellten einseitigen Hebel eine Richtungsumkehr der Reaktionskraft F_{R} bewirkt.

Diese Situation ist in Fig. 4 dargestellt. Bei dieser Ausführungsform können die einander zugewandten Flächen der Dünnstellen 29 und 27 mit einer einzigen Bohrung realisiert werden. Dagegen sind zur Herstellung der einander zugewandten Flächen der Dünnstellen 29 jeweils separate Bohrungen erforderlich.

Selbstverständlich kann der Hebel 23 des Sterngelenks 28 in Fig. 3 auch nach links verlaufen bzw. verlängert werden und beispielsweise seitlich (in der Zeichnung) nach links am Sterngelenk 28 vorbei geführt sein. Auch auf diese Weise kann mit der Struktur nach Fig. 3 ein zweiseitiger Hebel realisiert werden.

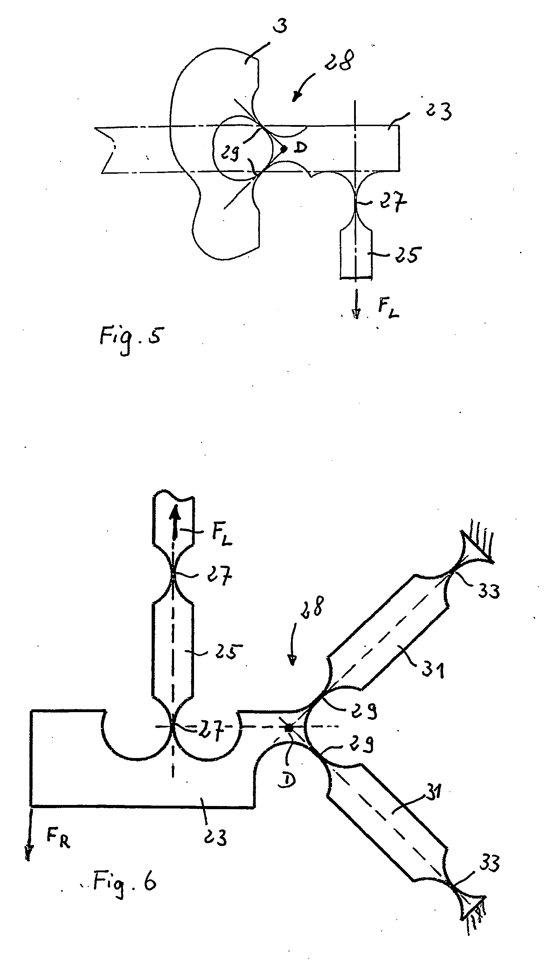

Eine derartige Struktur ist in Fig. 5 dargestellt. Der Hebel 23 ist hier als zweiseitiger Hebel realisiert, wobei die Reaktionskraft am linken, nicht dargestellten Ende des Hebels 23 angreift. Bei dieser Struktur eines Sterngelenks 28 ist der Hebel 23 direkt mittels zweier Biegebereiche 29 an das Festland, d.h. den ortsfesten Grundkörper 3 gekoppelt. Bei diesen Biegebereichen 29 handelt es sich um eine verlängerte Dünnstelle, die nicht einfach durch zwei seitliche Bohrungen hergestellt wird Diese Bauform ist für platzsparende Anordnung des Übersetzungshebels angedacht. Das zwischen den beiden Gelenken in den vorherigen Ausführungsformen ausgeführte Koppelelement zwischen den beiden Dünnstellen entfällt hier also vollständig.. Ähnlich wie eine Koppelelement, welches an beiden Enden jeweils über einen Biegebereich zwischen dem Hebel und dem Lastaufnahmeelement oder einem vorgeschalteten Hebel vorgesehen ist, hat die verlängerte Dünnstelle 29 den Vorteil, dass keine unerwünschten Kräfte senkrecht zur Längserstreckungsebene der Dünnstelle übertragen werden.

Es können jedoch auch die Ausführungsformen der in den Figuren 3 und 4 dargestellten Strukturen so abgewandelt werden, dass der Hebel 23 jeweils nach links verlängert wird. Dieser kann wiederum seitlich am Sterngelenk 28 nach links geführt werden. Es ist jedoch auch eine Ausführungsform denkbar, bei der die beiden Koppelemente bzw. die Dünnstellen 29 jeweils in der Zeichenebene vertikal nach oben bzw. unten geschoben werden, so dass der Stützhebel zwischen den beiden Dünnstellen 29 verlaufen kann.

Es sei an dieser Stelle bemerkt, dass bei allen Ausführungsformen der Stützarm des Hebels, d.h. derjenige Hebelteil, an dem die jeweilige Reaktionskraft F_{R} angreift, nicht monolithisch mit dem übrigen Hebel ausgeführt sein muss. Vielmehr kann der gesamte Stützarm oder ein Teil davon auch in einem geeigneten Bereich mit dem anderen Teil des Hebels verschraubt, geklebt oder jeder beliebigen Befestigungsmethode stoff- oder formschlüssig verbunden sein.

Fig. 6 zeigt eine weitere Struktur für eine Sterngelenk 28, die der in Fig. 3 dargestellten Struktur ähnlich ist. Diese Ausführungsform unterscheidet sich jedoch dadurch, dass der (geradlinige) Verlauf der dünnsten Stelle der Dünnstelle 27 zur Ankopplung des Koppelelements 25 in der Schnittgeraden der Längserstreck-ungsebene des Biegebereichs bzw. der Dünnstelle 27 mit der durch die virtuelle Schwenkachse D verlaufende und auf der Längserstreckungsebene des Biegebereichs 27 senkrecht stehenden Ebene liegt. Dies hat den Vorteil, dass bei einem Verkippen der Längserstreckungsebene des Biegebereichs 27 bzw. des Koppelelements 25 der gedachte Hebelarm konstant bleibt.

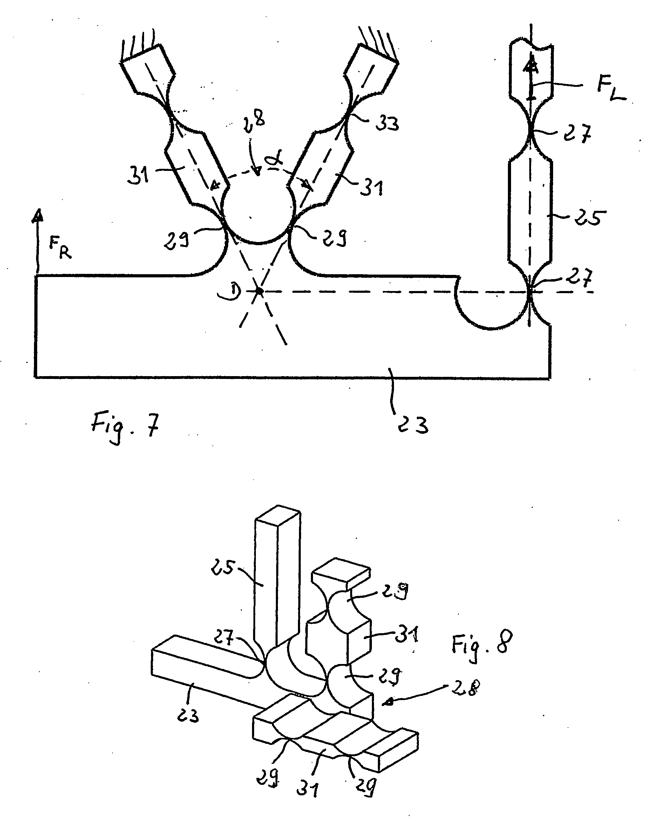

Dies gilt auch für die in Fig. 7 dargestellte Struktur eines Sterngelenks 28. Hier ist der Hebel 23 über die Koppelelemente 31 mit dem Festland verbunden. Bei dieser Struktur steht die den Winkel α zwischen den Längserstreckungsebenen der Biegebereiche 29 halbierende Ebene parallel zur Längserstreckungsebene des Biegebereichs 27 über den die Lastkraft F_{L} angekoppelt wird. Der Biegebereich 27 ist wieder so angeordnet, dass sich bei einer Verkippung der Längserstreckungsebene und damit der Lasteinleitungsrichtung der gedachte Hebelarm nicht ändert.

Es sei darauf hingewiesen, dass die beiden Biegebereiche 29 eines Sterngelenks 28 nicht zwingend in irgendeiner Weise symmetrisch zum Hebel 23 vorgesehen sein müssen, wie dies bei den Strukturen gemäß den Figuren 1 bis 7 der Fall ist. Vielmehr können die Längserstreckungsebenen frei in einer Weise gewählt werden, die sich für die gewünschte Bauform als vorteilhaft erweist. Beispielsweise kann auch ein Biegebereich 29 mit seiner Längserstreckungsebene parallel zur Längserstreckungsebene des die Lastkraft einleitenden Biegebereichs 27 gewählt werden und der andere Biegebereich 29 so, dass sich die virtuelle Schwenkachse an der gewünschten Position ergibt. Der Winkel α zwischen den beiden Längserstreckungsebenen soll zudem so gewählt werden, dass die Steifigkeit in entsprechenden Raum- oder Rotationsrichtungen ausreichend groß ist.

Fig. 8 zeigt in perspektivischer Ansicht eine Ausführungsform, bei der die Biegebereiche 29 des Sterngelenks 28 versetzt nebeneinander liegen. Die Längserstreckungsebenen schließen einen Winkel von 90 Grad ein, wobei die virtuelle Schwenkachse mit dem geradlinigen Verlauf der dünnsten Stelle des Biegebereichs 29, dessen Längserstreckungsebene parallel zum Hebel 23 liegt, zusammenfällt oder in einem geringen Abstand davon liegt. Dadurch wird eine niedrige Gesamtsteifigkeit dieses Hebelübersetzungssystems erreicht, mit einer maximalen Sicherheit gegen mögliche Überlasten.

Die Strukturen nach den schematischen Figuren 3 bis 8 zeigen die Vielfalt, mit der ein derartiges Sterngelenk in der Praxis einsetzbar ist. Sie ermöglichen auch bei einer einseitigen, unsymmetrischen Anordnung eines Hebels (außerhalb der Symmetrieebene) eines Wägeaufnehmers, wie dies in den Figuren 1 und 2 gezeigt ist, einen kompakten und steifen Aufbau des Wägeaufnehmers, wobei gleichzeitig ein großes Übersetzungsverhältnis realisierbar ist

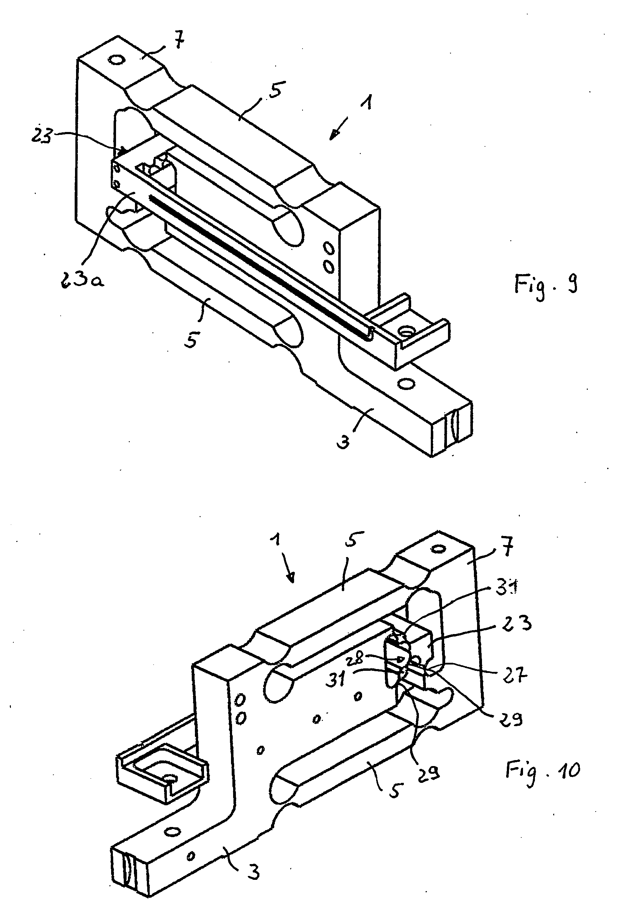

Abschließend sei noch eine weitere Ausführungsform für einen Wägeaufnehmer gemäß den Figuren 8 und 9 beschrieben, dessen Hebelgetriebe lediglich einen einzigen Hebel aufweist. Der Wägeaufnehmer 1 weist die bereits im Zusammenhang mit dem Wägeaufnehmer nach den Figuren 1 und 2 beschriebenen Aufbau aus dem Grundkörper 3, den Parallellenkern 5 und dem Lastaufnahmeelement 7 auf. Das Lastaufnahmeelement 7 ist über einen Biegebereich 27, der als verlängerter Biegebereich ausgebildet sein kann (vgl. Fig. 5: hier sind die Biegebereiche 29 als verlängerte Biegebereiche ausgebildet), mit einem Hebel 23 verbunden. Der Hebel 23 ist über ein Sterngelenk 28, welches die Koppelelemente 31 und entsprechende Biegebereiche 29 umfasst, mit dem zwischen die Parallellenker 5 vorkragenden Bereich 21 des Grundkörpers 3 verbunden. Die Struktur des Sterngelenks 28 entspricht dabei weitgehend der in Fig. 6 dargestellten Struktur, wobei, wie bereits erläutert, die Lastkraft nicht über ein Koppelelement, sondern über eine verlängerte Dünnstelle 27 auf den Hebel 23 eingeleitet wird.

Wie aus Fig. 9 ersichtlich, kann der seitlich am Grundkörper vorbei geführte Teil 23a des Hebels 23 durch Verschrauben, Verschweißen oder andere geeignete Verbindungsarten mit dem übrigen Teil des Hebels, der einstückig mit dem Grundkörper ausgebildet ist, verbunden sein. Die Steifigkeit des Sterngelenks gewährleistet trotz dieses unsymmetrischen und einfachen Aufbaus eine hervorragende Messgenauigkeit und Unempfindlichkeit gegen äußere Störkräfte.

## Patentansprüche

1. Hebelgetriebes, insbesondere für einen Wägeaufnehmer einer nach dem Prinzip der elektromagnetischen Kraftkompensation arbeitende Waage,
(a) mit wenigstens einem mit einem ortsfesten Grundkörper (3) oder einem damit verbundenen Element verbundenen Hebel (23),
(b) wobei der wenigstens eine Hebel (23) über ein eine Schwenkachse des wenigstens einen Hebels (23) definierendes, elastisch deformierbares Gelenk (28) mit dem Grundkörper (3) oder dem damit verbundenen Element verbunden ist,
(c) wobei auf einen ersten Hebelarm des wenigstens einen Hebels (23) eine der Gewichtskraft (F_{G}) entsprechende oder von dieser abgeleitete Lastkraft (F_{L}) wirkt, welche an einem zweiten Hebelarm des wenigstens einen Hebels eine Reaktionskraft (F_{R}) erzeugt,
**dadurch gekennzeichnet,**
(d) **dass** das elastisch deformierbare Gelenk (28) zwei dünne, elastisch deformierbare Biegebereiche (29) umfasst, die mit einer ersten Seite jeweils unmittelbar mit dem Hebel (23) und mit einer zweiten Seite jeweils mittelbar oder unmittelbar mit dem Grundkörper (3) oder dem damit verbundenen Element verbunden sind,
(e) wobei jeder Biegebereich (29) in einer Richtung senkrecht zur einer durch die Geometrie des Biegebereichs (29) definierten Längserstreckungsebene zur Erzeugung einer Schwenkbewegung des wenigstens einen Hebels (23) biegbar und
(f) wobei die Längserstreckungsebenen der Biegebereiche (29) einen Winkel (α) ungleich Null einschließen und die Biegebereiche (29 derart angeordnet sind,
(g) **dass** durch die zwei elastisch deformierbaren Biegebereiche (29) eine virtuelle Schwenkachse (D) des wenigstens einen Hebels (29) definiert wird, welche jenseits der jeweils ersten Seiten der beiden Biegebereiche (29) auf der Seite des Hebels (23) liegt.

2. Hebelgetriebe nach Anspruch 1, **dadurch gekennzeichnet, dass** die zwei elastischen deformierbaren Biegebereiche (29) eine Breite aufweisen, die groß gegen die Dicke des betreffenden Biegebereichs (29) an seiner jeweils dünnsten Stelle in der Richtung senkrecht zur jeweiligen Längserstreckungsebene ist.

3. Hebelgetriebe nach Anspruch 1 oder 2, **dadurch gekennzeichnet, dass** die Biegebereiche (29) symmetrisch zur betreffenden Längserstreckungsebene ausgebildet sind.

4. Hebelgetriebe nach einem der vorhergehenden Ansprüche, **dadurch gekennzeichnet, dass** die Schnittgerade der beiden Längserstreckungsebenen der zwei Biegebereiche (29) die virtuelle Schwenkachse (D) des wenigstens einen Hebels bildet.

5. Hebelgetriebe nach einem der vorhergehenden Ansprüche, **dadurch gekennzeichnet, dass** die den durch die Längserstreckungsebenen eingeschlossenen Winkel (α) halbierende Ebene, die ebenfalls durch die virtuelle Schwenkachse (D) verläuft, senkrecht zur Richtung der Lastkraft (F_{L}) verläuft.

6. Hebelgetriebe nach einem der Ansprüche 1 bis 4, **dadurch gekennzeichnet, dass** die den durch die Längserstreckungsebenen eingeschlossenen Winkel (α) halbierende Ebene, die ebenfalls durch die virtuelle Schwenkachse (D) verläuft, parallel zur Richtung der Lastkraft (F_{L}) verläuft.

7. Hebelgetriebe nach einen der vorhergehenden Ansprüche, **dadurch gekennzeichnet, dass** die Lastkraft (F_{L}) über einen dünnen, elastisch deformierbaren Biegebereich (27) auf den Hebel (23) übertragen wird, wobei der Biegebereich (27) so ausgestaltet ist, dass seine Längserstreck-ungsebene parallel zur virtuellen Schwenkachse (D) verläuft.

8. Hebelgetriebe nach Anspruch 7, **dadurch gekennzeichnet, dass** der Biegebereich (27) zur Übertragung der Lastkraft (F_{L}) so ausgebildet ist, dass bei Auftreten von Kräften, die ein elastisches Biegen des Biegebereichs (27) bewirken, das Biegen im Bereich der Schnittgeraden der Längserstreckungsebene mit der Ebene erfolgt, welche durch den gedachten Hebelarm und die virtuelle Schwenkachse (D) aufgespannt wird.

9. Hebelgetriebe nach einem der vorhergehenden Ansprüche, **dadurch gekennzeichnet, dass** die Reaktionskraft (F_{R}) über einen dünnen, elastisch deformierbaren Biegebereich auf den Hebel (23) übertragen wird, wobei der Biegebereich so ausgestaltet ist, dass seine Längserstreckungsebene, in welcher die Richtung der Kraftübertragung verläuft, parallel zur virtuellen Schwenkachse (D) verläuft.

10. Hebelgetriebe nach Anspruch 9, **dadurch gekennzeichnet, dass** der Biegebereich zur Übertragung der Reaktionskraft (F_{R}) so ausgebildet ist, dass bei Auftreten von Kräften, die ein elastisches Biegen des Biegebereichs bewirken, das Biegen im Bereich der Schnittgeraden der Längserstreckungsebene mit der Ebene erfolgt, welche durch den gedachten Hebelarm und die virtuelle Schwenkachse aufgespannt wird.

11. Hebelgetriebe nach einem der vorhergehenden Ansprüche, **dadurch gekennzeichnet, dass** einer oder beide Biegebereiche (29) des elastisch deformierbaren Gelenks (28) über ein Koppelelement (31) mit dem Grundkörper (3) oder dem damit verbundenen Element verbunden sind.

12. Hebelgetriebe nach Anspruch 11, **dadurch gekennzeichnet, dass** zwischen dem Koppelelement (31) und dem Grundkörper (3) oder dem damit verbundenen Element ein weiterer Biegebereich (33) vorgesehen ist, dessen Längserstreckungsebene mit der Längserstreckungsebene des Biegebereichs (29) des elastisch deformierbaren Gelenks (28) identisch ist, mit dem das Koppelelement (31) mit dem Hebel (23) verbunden ist.

13. Wägeaufnehmer, insbesondere für eine nach dem Prinzip der elektromagnetischen Kraftkompensation arbeitende Waage, mit einem Hebelgetriebe nach einem der vorhergehenden Ansprüche, welches die zu erfassende Gewichtskraft (F_{G}) übersetzt oder untersetzt.

14. Positioniereinrichtung, beispielsweise für optische Komponenten, mit einem Hebelgetriebe nach einem der vorhergehenden Ansprüche, welches die Bewegung eines Aktors in eine Bewegung einer Halteeinrichtung für das zu positionierende Element umsetzt.

## Claims

1. A lever mechanism, in particular for a weighing sensor of a balance working according to the principle of electromagnetic force compensation,
(a) having at least one lever (23) which is connected to a stationary base body (3) or an element connected therewith,
(b) wherein the at least one lever (23) is connected to the base body (3) or the element connected therewith by way of an elastically deformable articulation (28) defining a swivel axis of the at least one lever (23),
(c) wherein there acts on a first lever arm of the at least one lever (23) a load force (F_{L}) which corresponds to or is derived from the weight force (F_{G}) and generates a reaction force (F_{R}) on a second lever arm of the at least one lever,
**characterised in that**
(d) the elastically deformable articulation (28) comprises two thin, elastically deformable bending regions (29) which with a first side are in each case connected directly to the lever (23) and with a second side are in each case connected indirectly or directly to the base body (3) or to the element connected therewith,
(e) wherein each bending region (29) is bendable in a direction perpendicularly to the one longitudinal extension plane defined by the geometry of the bending region (29) in order to generate a swivelling movement of the at least one lever (23), and
(f) wherein the longitudinal extension planes of the bending regions (29) enclose an angle (α) not equal to zero, and the bending regions (29) are arranged in such a way
(g) that there is defined by the two elastically deformable bending regions (29) a virtual swivel axis (D) of the least one lever (29) which lies on the other side of the respective first sides of the two bending regions (29) on the side of the lever (23).

2. A lever mechanism according to claim 1, **characterised in that** the two elastically deformable bending regions (29) are of a width that is large compared with the thickness of the relevant bending region (29) at its thinnest point in each case in the direction perpendicularly to the respective longitudinal extension plane.

3. A lever mechanism according to claim 1 or 2, **characterised in that** the bending regions (29) are formed so as to be symmetrical to the relevant longitudinal extension plane.

4. A lever mechanism according to one of the preceding claims, **characterised in that** the intersection line of the two longitudinal extension planes of the two bending regions (29) forms the virtual swivel axis (D) of the at least one lever.

5. A lever mechanism according to one of the preceding claims, **characterised in that** the plane bisecting the angle (α) enclosed by the longitudinal extension planes and likewise extending through the virtual swivel axis (D) extends perpendicularly to the direction of the load force (F_{L}).

6. A lever mechanism according to one of claims 1 to 4, **characterised in that** the plane bisecting the angle (α) enclosed by the longitudinal extension planes and likewise extending through the virtual swivel axis (D) extends parallel to the direction of the load force (F_{L}).

7. A lever mechanism according to one of the preceding claims, **characterised in that** the load force (F_{L}) is transmitted to the lever (23) by way of a thin, elastically deformable bending region (27), wherein the bending region (27) is configured in such a way that its longitudinal extension plane extends parallel to the virtual swivel axis (D).

8. A lever mechanism according to claim 7, **characterised in that** the bending region (27) is formed in such a way for the transmission of the load force (F_{L}) that when forces occur that give rise to elastic bending of the bending region (27), the bending is effected in the region of the intersection lines of the longitudinal extension plane with the plane which is spanned by the imaginary lever arm and the virtual swivel axis (D).

9. A lever mechanism according to one of the preceding claims, **characterised in that** the reaction force (F_{R}) is transmitted to the lever (23) by way of a thin, elastically deformable bending region, wherein the bending region is configured in such a way that its longitudinal extension plane, in which the direction of force transmission extends, extends parallel to the virtual swivel axis (D).

10. A lever mechanism according to claim 9, **characterised in that** the bending region is formed in such a way for the transmission of the reaction force (F_{R}) that when forces occur that give rise to elastic bending of the bending region, the bending is effected in the region of the intersection lines of the longitudinal extension plane with the plane which is spanned by the imaginary lever arm and the virtual swivel axis.

11. A lever mechanism according to one of the preceding claims, **characterised in that** one or both bending regions (29) of the elastically deformable articulation (28) is/are connected to the base body (3) or the element connected therewith by way of a coupling element (31).

12. A lever mechanism according to claim 11, **characterised in that** provided between the coupling element (31) and the base body (3) or the element connected therewith there is a further bending region (33) whose longitudinal extension plane is identical with the longitudinal extension plane of the bending region (29) of the elastically deformable articulation (28) with which the coupling element (31) is connected to the lever (23).

13. A weighing sensor, in particular for a balance working according to the principle of electromagnetic force compensation, having a lever mechanism according to one of the preceding claims which magnifies or reduces the weight force (F_{G}) to be detected.

14. A positioning device, for example for optical components, having a lever mechanism according to one of the preceding claims which converts the movement of an actuator into a movement of a holding device for the element that is to be positioned.

## Revendications

1. Engrenage à levier, en particulier pour le capteur de pesée d'une balance fonctionnant suivant le principe de la compensation de force électromagnétique,
(a) avec au moins un levier (23) relié à un corps de base fixe (3) ou à un élément relié à celui-ci,
(b) dans lequel le au moins un levier (23) est relié au corps de base (3) ou à l'élément relié à celui-ci par le biais d'une articulation (28) élastiquement déformable et définissant un axe de pivotement du au moins un levier (23),
(c) dans lequel une force de levier (F_{L}), correspondant au poids (F_{G}) ou découlant de celui-ci, agit sur un premier bras de levier du au moins un levier (23), laquelle force de levier produit une force de réaction (F_{R}) au niveau d'un second bras de levier du au moins un levier,
**caractérisé en ce que**
(d) l'articulation élastiquement déformable (28) comprend deux zones de flexion (29) minces et élastiquement déformables qui sont respectivement reliées, par un premier côté directement au levier (23), et par un second côté directement ou indirectement au corps de base (3) ou à l'élément relié à celui-ci,
(e) dans lequel chaque zone de flexion (29) peut être repliée dans une direction perpendiculaire à un plan d'extension longitudinale défini par la géométrie de la zone de flexion (29), pour produire un mouvement de pivotement du au moins un levier (23) et
(f) dans lequel les plans d'extension longitudinale des zones de flexion (29) forment un angle (α) différent de zéro et les zones de flexion (29) sont agencées de telle sorte que
(g) les deux zones de flexion élastiquement déformables (29) définissent un axe de pivotement virtuel (D) du au moins un levier (23), lequel axe se situe au-delà des premiers côtés respectifs des deux zones de flexion (29) du côté du levier (23).

2. Engrenage à levier selon la revendication 1, **caractérisé en ce que** les deux zones de flexion élastiquement déformables (29) présentent une largeur qui est importante par rapport à l'épaisseur de la zone de flexion concernée (29), en son emplacement le plus mince dans la direction perpendiculaire au plan d'extension longitudinale respectif

3. Engrenage à levier selon la revendication 1 ou 2, **caractérisé en ce que** les zones de flexion (29) sont formées symétriquement par rapport au plan d'extension longitudinale concerné.

4. Engrenage à levier selon l'une quelconque des revendications précédentes, **caractérisé en ce que** la ligne d'intersection des deux plans d'extension longitudinale des deux zones de flexion (29) forme l'axe de pivotement virtuel (D) du au moins un levier.

5. Engrenage à levier selon l'une quelconque des revendications précédentes, **caractérisé en ce que** le plan divisant en deux l'angle (α) formé par les plans d'extension longitudinale, plan qui s'étend également à travers l'axe de pivotement virtuel (D), s'étend perpendiculairement à la direction de la force de levier (F_{L}).

6. Engrenage à levier selon l'une quelconque des revendications 1 à 4, **caractérisé en ce que** le plan divisant en deux l'angle (α) formé par les plans d'extension longitudinale, plan qui s'étend également à travers l'axe de pivotement virtuel (D), s'étend parallèlement à la direction de la force de levier (F_{L}).

7. Engrenage à levier selon l'une quelconque des revendications précédentes, **caractérisé en ce que** la force de levier (F_{L}) est transmise au levier (23) par le biais d'une zone de flexion (27) mince et élastiquement déformable, dans lequel la zone de flexion (27) est aménagée de telle sorte que son plan d'extension longitudinale s'étend parallèlement à l'axe de pivotement virtuel (D).

8. Engrenage à levier selon la revendication 7, **caractérisé en ce que** la zone de flexion (27) est formée, pour ce qui est de la transmission de la force de levier (F_{L}), de telle sorte que, lors de l'apparition de forces qui entraînent une flexion élastique de la zone de flexion (27), une flexion au niveau des lignes d'intersection du plan d'extension longitudinale se produit avec le plan établi par le bras de levier visé et l'axe de pivotement virtuel (D).

9. Engrenage à levier selon l'une quelconque des revendications précédentes, **caractérisé en ce que** la force de réaction (F_{R}) est transmise au levier (23) par le biais d'une zone de flexion mince et élastiquement déformable, dans lequel la zone de flexion est aménagée de telle sorte que son plan d'extension longitudinale, dans lequel s'étend la direction de la transmission de force, s'étend parallèlement à l'axe de pivotement virtuel (D).

10. Engrenage à levier selon la revendication 7, **caractérisé en ce que** la zone de flexion est formée, pour ce qui est de la transmission de la force de réaction (F_{R}), de telle sorte que, lors de l'apparition de forces qui entraînent une flexion élastique de la zone de flexion, une flexion au niveau des lignes d'intersection du plan d'extension longitudinale se produit avec le plan établi par le bras de levier visé et l'axe de pivotement virtuel (D).

11. Engrenage à levier selon l'une quelconque des revendications précédentes, **caractérisé en ce qu'**une zone de flexion ou les deux (29) de l'articulation élastiquement déformable (28) est/sont reliée(s) au corps de base (3) ou à l'élément relié à celui-ci par le biais d'un élément de couplage (31).

12. Engrenage à levier selon la revendication 11, **caractérisé en ce que**, entre l'élément de couplage (31) et le corps de base (3) ou l'élément relié à celui-ci, on a prévu une autre zone de flexion (33) dont le plan d'extension longitudinale est identique au plan d'extension longitudinale de la zone de flexion (29) de l'articulation élastiquement déformable (28) au moyen de laquelle l'élément de couplage (31) est relié au levier (23).

13. Capteur de pesée, en particulier pour une balance fonctionnant suivant le principe de la compensation de force électromagnétique, avec un engrenage à levier selon l'une quelconque des revendications précédentes, lequel engrenage multiplie ou démultiplie le poids (F_{G}) à relever.

14. Dispositif de positionnement, par exemple pour des composants optiques, avec un engrenage à levier selon l'une quelconque des revendications précédentes, lequel engrenage transforme le mouvement d'un actionneur en un mouvement de dispositif de maintien pour l'élément à positionner.
